Europäisches Patentamt

European Patent Office

Office européen des brevets

(19)

(11) Publication number: **0 224 247**

**A2**

(12) **EUROPEAN PATENT APPLICATION**

(21) Application number: 86116380.6

(51) Int. Cl.⁴: **H04N 11/06**

(22) Date of filing: 25.11.86

(30) Priority: 27.11.85 FI 854701

(43) Date of publication of application:
**03.06.87 Bulletin 87/23**

(84) Designated Contracting States:
**DE FR GB IT NL SE**

(71) Applicant: **VALTION TEKNILLINEN TUTKIMUSKESKUS
Vuorimiehentie 5
SF-02150 Espoo 15(FI)**

(72) Inventor: **Haikonen, Pentti
Länsiportti 4 A 16
SF-02210 Espoo(FI)**

(74) Representative: **Zipse + Habersack
Kemnatenstrasse 49
D-8000 München 19(DE)**

(54) **Colour coding method for video image transmitters.**

(57) The invention relates to a colour coding method for a digital video image transmitter. According to the method, a sum value $P_{ij}$ is calculated for each picture element ij, located in a raster pattern formed of n x m elements from the basic colour values $R_{ij}$, $G_{ij}$ and $B_{ij}$ of the element in question, according to the following formula:

$$P_{ij} = (1 \pm (-1)^j) R_{ij}/2 \mp (1 -(-1)^j)G_{ij}/2 + (-1)^j k \bullet B_{ij}$$

and which sum values $P_{ij}$ are transmitted into the receiver and in which formula

$P_{ij}$ = sum value of the element ij,

j = index of the element parallel to the line = 1, 2, 3,..., m

i = vertical index of the element = 1, 2, 3, ..., n

k = coefficient O<k<1;

n, m = integrals.

The signs ± and ∓ designate that the sign changes line by line so that the upper sign prevails while i is an even number and the lower sign prevails while i is an odd number. The signs can also be reversed. In the receiver, the approximative values $\hat{R}_{ij}$, $\hat{G}_{ij}$ and $\hat{B}_{ij}$ of the colour components $R_{ij}$, $G_{ij}$ and $B_{ij}$ are calculated for each element ij on the basis of the sum value $P_{ij}$ of the corresponding transmitted element and the sum values of the adjacent elements.

EP 0 224 247 A2

## COLOR CODING METHOD FOR VIDEO IMAGE TRANSMITTERS

The present invention relates to a colour coding method for digital video image transmitters.

A digital transmitter for black-and white video images typically comprises an analogue to digital converter, a picture memory and a line transmitter in the transmitting end, and a line receiver, picture memory and a digital to analogue converter respectively in the receiving end. The black-and-white video image to be transmitted (one TV field or one TV image) is seized into the picture memory of the transmitter and transmitted, at the speed defined by the data transmission line, into the receiver, in the picture memory whereof the said image is formed and can be continuously shown therefrom.

In principle a live image transmitter operated in a narrow bandwidth data transmission channel functions in the above described fashion, but the aim is to transmit as many images per second (for instance 12,5 images per second) as possible in order to maintain a lively impression. This can be achieved by transmitting from successive images only those elements that have been changed, and additionally by coding these changed areas by means of some video compression method, which further reduces the amount of data to be transmitted. One such video compression method is introduced in the Finnish patent 70662 (patent application 844970).

The principles laid down above can be applied for transmitting coloured video images. In the transmission of colour images, however, instead of transmitting only one luminance component, the number of different components to be transmitted is three, by aid of which components the luminance, colour saturation and hue of the image can be reconstructed. These components can be the basic TV system colour components red R, green G and blue B, or components created on the basis of these, such as luminance Y, R-Y and B-Y.

When realized in a straightforward fashion, the transmission of a coloured video image requires a picture memory for each transmittable component both in the transmitter and the receiver. Moreover, in live image transmitters operating in a narrow bandwidth data transmission channel, there may be needed three separate conditional replenishment circuits.

The purpose of the present invention is to improve the above described colour coding methods so that for example both the transmitter and the receiver remain simple in structure. In order to realize this, the method of the present invention is characterized by the features enlisted in the appended patent claims.

By employing the method of the invention, a transmitter for black-and-white video images can be converted into a transmitter for coloured video images without increasing the picture memory capacity and without changing the basic structure of the transmitter. Moreover, it is unnecessary to make changes in the conditional replenishment circuit in the live image transmitter, but in the method of the invention the detection of changed picture areas is carried out from all basic colours by means of the existing conditional replenishment circuit.

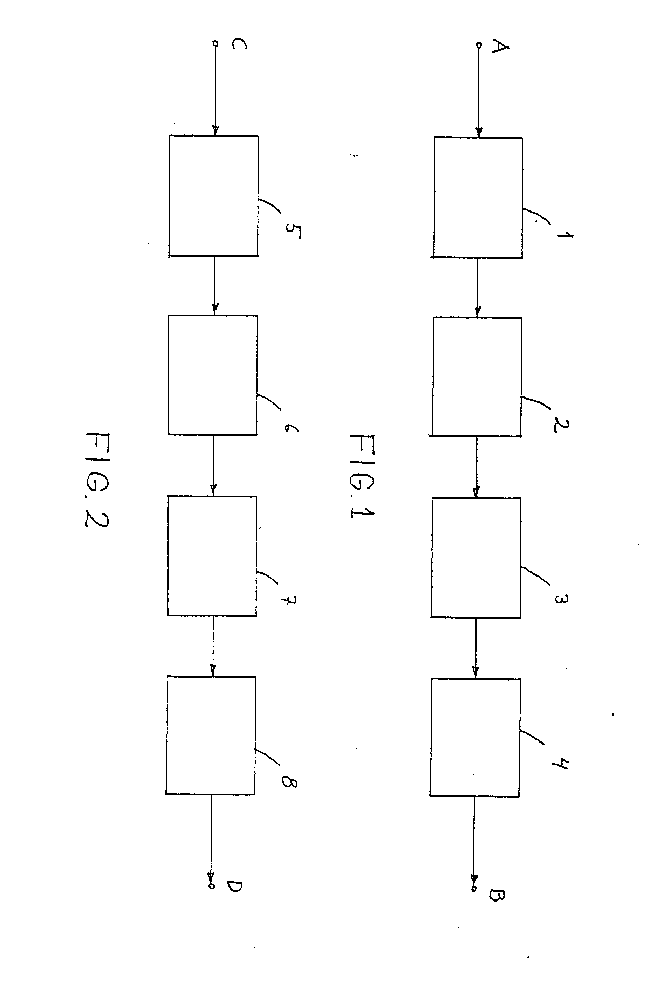

In the following the method is explained by aid of the appended block diagrams of video image transmitting equipment, wherein figure 1 illustrates the transmitter and figure 2 illustrates the receiver.

A standard TV video signal is brought, for instance from a video camera, via the input interface A into the colour coder and into the analogue to digital (A/D) converter 1, where the picture signal is colour-coded by employing the method according to the present invention, to be described later on, and digitized. The digitized picture signal is stored into the picture memory 2 and therefrom further via a possible compression device 4 into the coder 4 and via the output interface B into the transmission channel. If the data transmission channel has a sufficient bandwidth, the compression device 3 is unnecessary.

The signal received through the input interface C of the receiver is decoded in the decoder 5, the possible compression is dissolved in the decompressor 6 and the picture signal is stored into the picture memory 7. Therefrom the picture signal is fed, through the digital to analogue (D/A-) converter and the colour decoder 8 into the output interface D, which is connected for instance to a colour monitor, on the screen whereof the received image can be seen. The picture signal colour-coded in the colour decoder is reconstructed into a signal corresponding to the original picture signal.

A digital TV image is composed of n lines, each of which is divided into m elements -in other words, it is a raster pattern formed of n x m picture elements (n and m are integrals). Let the luminance picture elements of a black-and-white image be marked as follows:

Line 1 $Y_{11}$ $Y_{12}$ $Y_{13}$ $Y_{14}$ ...
Line 2 $Y_{21}$ $Y_{22}$ $Y_{23}$ $Y_{24}$ ...
Line 3 ...

...

In the colour coding method of the invention, the luminance values $Y_{ij}$ are replaced by the sum $P_{ij}$ of the values $R_{ij}$, $G_{ij}$ and $B_{ij}$ of the the colour components corresponding to the element in question, according to the following formula:

(1) $P_{ij} = (1\pm(-1)^j) R_{ij}/2 + (1\mp(-1)^j)G_{ij}/2 - (-1)^j.k\bullet B_{ij}$

where $P_{ij}$ = sum value of the picture element ij

$R_{ij}$ = value corresponding to the red signal of the element ij

$G_{ij}$ = value corresponding to the green signal of the element ij

$B_{ij}$ = value corresponding to the blue signal of the element ij

j = index of the picture element parallel to the line

i = vertical index of the picture element

k = coefficient, $0 < k < 1$;

the signs $\pm$ and $\mp$ mean that the sign changes line by line so that the upper sign prevails while i is an even number and the lower sign prevails while i is an odd number. The signs can also be reversed.

The equation (1) leads us to the following picture element value raster:

|  | j = 1 | j = 2 | j = 3 | j = 4 |
|---|---|---|---|---|
| Line 1 | $R_{11}-kB_{11}$ | $G_{12}+kB_{12}$ | $R_{13}-kB_{13}$ | $G_{14}+kB_{14}$ ... |
| Line 2 | $G_{21}-kB_{21}$ | $R_{22}+kB_{22}$ | $G_{23}-kB_{23}$ | $R_{24}+kB_{24}$ ... |
| Line 3 | $R_{31}-kB_{31}$ | $G_{32}+kB_{32}$ | $R_{33}-kB_{33}$ | $G_{34}+kB_{34}$ ... |

. . .

In the receiver, the approximate values $\hat{R}_{ij}$, $\hat{G}_{ij}$ and $\hat{B}_{ij}$ of the colour components $R_{ij}$, $G_{ij}$ and $B_{ij}$ are calculated for each picture element ij on the basis of the received $P_{ij}$ values for instance in the following fashion:

$$R^{\wedge}_{ij} = (P_{ij} + P_{(i+1)(j+1)})/2, \quad j = 1,3,5\ldots$$
$$R^{\wedge}_{ij} = (P_{(i+1)j} + P_{i(j+1)})/2, \quad j = 2,4,6\ldots$$
$$\left.\right\} i = 1,3,5\ldots$$

(2)

$$R^{\wedge}_{ij} = (P_{(i+1)j} + P_{i(j+1)})/2, \quad j = 1,3,5\ldots$$
$$R^{\wedge}_{ij} = (P_{ij} + P_{(i+1)(j+1)})/2, \quad j = 2,4,6\ldots$$
$$\left.\right\} i = 2,4,6\ldots$$

$$G^{\wedge}_{ij} = (P_{(i+1)j} + P_{i(j+1)})/2, \quad j = 1,3,5\ldots$$
$$G^{\wedge}_{ij} = (P_{ij} + P_{(i+1)(j+1)})/2, \quad j = 2,4,6\ldots$$
$$\left.\right\} i = 1,3,5\ldots$$

(3)

$$G^{\wedge}_{ij} = (P_{ij} + P_{(i+1)(j+1)})/2, \quad j = 1,3,5\ldots$$
$$G^{\wedge}_{ij} = (P_{(i+1)j} + P_{i(j+1)})/2, \quad j = 2,4,6\ldots$$
$$\left.\right\} i = 2,4,6\ldots$$

$$B^{\wedge}_{ij} = (P_{(i+1)(j+1)} - P_{ij})/2k, \quad j = 1,3,5\ldots$$

(4)

$$B^{\wedge}_{ij} = (P_{(i+1)j} - P_{i(j+1)})/2k, \quad j = 2,4,6\ldots$$

On the basis of the formulas (2), (3) and (4) we get:

$$R^{\wedge}_{11} = ((R_{11} - kB_{11}) + (R_{22} + kB_{22}))/2 = (R_{11} + R_{22})/2 + k(B_{22} - B_{11})/2$$

(5)

$$R^{\wedge}_{12} = ((R_{22} + kB_{22}) + (R_{13} - kB_{13}))/2 = (R_{22} + R_{13})/2 + k(B_{22} - B_{13})/2$$

etc.

$$G^{\wedge}_{11}=((G_{21}-kB_{21})+(G_{12}+kB_{12}))/2=(G_{21}+G_{12})/2+k(B_{12}-B_{21})/2$$
(6)

$$G^{\wedge}_{12}=\ldots$$

etc.

$$B^{\wedge}_{11}=((R_{22}+kB_{22})-(R_{11}-kB_{11}))/2k=(B_{11}+B_{22})/2+(R_{22}-R_{11})/2k$$
(7)

$$B^{\wedge}_{12}=\ldots$$

etc.

In the latter formulas (5), (6) and (7), the first term represents the filtered colour value and the second term represents the error in reconstruction.

It is observed that in the even colour areas there are no errors in the reconstruction, whereas in the contour areas errors occur in the reconstruction. The worst error is created while some information pertaining to B is shifted into the values R and G, and vice versa. The shifting of the B information into the values R and G can be minimized by maintaining the value of the coefficient k low. The shifting of R and G information into B is not so crucial, because the human eye is insensitive to the accurate value of blue. Moreover, for example in colours of human complexion, the value of B is nearly equal to zero. Consequently, now each luminance picture element has corresponding element value, which contains either R and B information, or G and B information.

In the video compression devices used for the transmission of a live image, the conditional replenishment circuit genarally operates so that it calculates the magnitude of

$$(8) \qquad S = \sum_{ij} |Y_{ijk'}-Y_{ij(k'-1)}|$$

Where the image area is composed of i x j picture element where $Y_{ijk'}$ is the luminance element value of the new picture and $Y_{ij(k'-1)}$ is the corresponding luminance element value of the previous picture, and where i, j and k' are integrals 1, 2, 3,... If the sum S surpasses a given value, the image area over which the sum was calculated is regarded as changed.

It is observed that in the method of the present invention, after the luminance values $Y_{ijk'}$ and $Y_{ijk'-1)}$ are replaced by the values $P_{ijk'}$ and $P_{ij(k'-1)}$ calculated as was described above, the values of all the colour components R, G and B will affect the sum S, and the change is expressed in all colours.

In the above specification, the colour coding method of the present invention, as regards the reception level, is described with reference to only one preferred method of reconstruction, where the approximate values $R^{\wedge}_{ij}$, $G^{\wedge}_{ij}$ and $B^{\wedge}_{ij}$ are calculated for each picture element ij by aid of the sum values $P_{ij}$, $P_{(i+1)j}$, $P_{i(j+1)}$ and $P_{(i+1)(j+1)}$ of the four transmitted picture elements in accordance with the formulas (2), (3) and -(4). It is clear that the approximative values of a certain colour component can on the reception level be calculated in some other fashion, by aid of the sum value $P_{ij}$ of the corresponding transmitted picture element and the sum values of the adjacent elements, by employing either four or more picture elements.

## Claims

1. A colour coding method for a digital video image transmitter, **characterized** in that for each picture element ij in the transmittable raster pattern composed of n x m elements there is calculated a sum value $P_{ij}$ from the basic colour values $R_{ij}$, $G_{ij}$ and $B_{ij}$ of the element in question, according to the following formula:
$P_{ij} = (1\pm(-1)^j)R_{ij}/2 + (1\mp(-1)^j)G_{ij}/2 + (-1)^j.k\bullet B_{ij}$

and which sum values $P_{ij}$ are transmitted into the receiver and in which formula

$P_{ij}$ = sum value of the picture element ij,

j = index of the element parallel to the line =. 1, 2, 3, ... ,m

i = vertical index of the element = 1, 2, 3,...,n

k = coefficient, $0 < k < 1$;

n, m = integrals; and

where the signs $\pm$ and $\mp$ designate that the sign changes line by line so that the upper sign prevails when i is an even number and the lower sign prevails when i is an odd number, and which signs can also be reversed.

2. The colour coding method of claim 1, **characterized** in that in the receiver there are calculated the approximative values $\hat{R}_{ij}$, $\hat{G}_{ij}$ and $\hat{B}_{ij}$ of the colour components $R_{ij}$, $G_{ij}$ and $B_{ij}$ for each picture element ij, on the basis if the sum value $P_{ij}$ of the corresponding transmitted element and the sum values of the adjacent elements.

3. The colour coding method of claim 2, **characterized** in that in the receiver, the approximative values $\hat{R}_{ij}$, $\hat{G}_{ij}$ and $\hat{B}_{ij}$ of the colour components $R_{ij}$, $G_{ij}$ and $B_{ij}$ are calculated for each picture element ij on the basis of the received $P_{ij}$ values as follows:

$$
\left.
\begin{aligned}
\hat{R}_{ij} &= (P_{ij} + P_{(i+1)(j+1)})/2, & j &= 1,3,5\ldots \\
\hat{R}_{ij} &= (P_{(i+1)j} + P_{i(j+1)})/2, & j &= 2,4,6\ldots
\end{aligned}
\right\} \quad i = 1,3,5\ldots
$$

$$
\left.
\begin{aligned}
\hat{R}_{ij} &= (P_{(i+1)j} + P_{i(j+1)})/2, & j &= 1,3,5\ldots \\
\hat{R}_{ij} &= (P_{ij} + P_{(i+1)(j+1)})/2, & j &= 2,4,6\ldots
\end{aligned}
\right\} \quad i = 2,4,6\ldots
$$

$$
\left.
\begin{aligned}
\hat{G}_{ij} &= (P_{(i+1)j} + P_{i(j+1)})/2, & j &= 1,3,5\ldots \\
\hat{G}_{ij} &= (P_{ij} + P_{(i+1)(j+1)})/2, & j &= 2,4,6\ldots
\end{aligned}
\right\} \quad i = 1,3,5\ldots
$$

$$
\left.
\begin{aligned}
\hat{G}_{ij} &= (P_{ij} + P_{(i+1)(j+1)})/2, & j &= 1,3,5\ldots \\
\hat{G}_{ij} &= (P_{(i+1)j} + P_{i(j+1)})/2, & j &= 2,4,6\ldots
\end{aligned}
\right\} \quad i = 2,4,6\ldots
$$

$$
\hat{B}_{ij} = (P_{(i+1)(j+1)} - P_{ij})/2k, \quad j = 1,3,5\ldots
$$

$$
\hat{B}_{ij} = (P_{(i+1)j} - P_{i(j+1)})/2k, \quad j = 2,4,6\ldots
$$

A →〔 〕 1 →〔 〕 2 →〔 〕 3 →〔 〕 4 → B

FIG.1

C →〔 〕 5 →〔 〕 6 →〔 〕 7 →〔 〕 8 → D

FIG.2